# EUROPÄISCHE PATENTSCHRIFT

(11) **EP 0 798 920 B1**
(45) Veröffentlichungstag und Bekanntmachung des Hinweises auf die Patenterteilung: **02.11.2006**
(21) Anmeldenummer: 97104981.2
(22) Anmeldetag: 24.03.1997
(51) Int. Cl.: H04N 5/445

(54) **Schaltungsanordnung zur Erzeugung eines an einem Bildschirm darstellbaren Bildsignals**
Circuit arrangement for generating a picture signal which can be displayed on a screen
Agencement de circuit pour la génération d'un signal d'image pouvant être affiché sur un écran

(30) Priorität: 25.03.1996 DE 19611694
(43) Veröffentlichungstag der Anmeldung: 01.10.1997
(73) Patentinhaber: Micronas GmbH, 79108 Freiburg i. Br. (DE)
(72) Erfinder: Englert, Ulrich, 81549 München (DE)
(74) Vertreter: Patentanwälte Westphal, Mussgnug & Partner

(56) Entgegenhaltungen:
- EP-A- 0 381 271
- EP-A- 0 597 197
- US-A- 4 386 367
- US-A- 5 452 010

## Beschreibung

Die Erfindung betrifft eine Schaltungsanordnung zur Erzeugung eines an einem Bildschirm mit einer vorgegebenen Taktrate darstellbaren Bildsignals.

Eine derartige Schaltungsanordnung ist in Zusammenhang mit der Darstellung von Zeichen und Grafiken auf einem Bildschirm, sogenannter On-Screen-Display (OSD), anwendbar. Die darzustellende OSD-Information wird dabei synchron zum Horizontalsynchron- und Bildpunkttakt des Bildschirms angezeigt. Der Bildpunkttakt schwankt jedoch. Dies liegt daran, daß der Bildpunkttakt an das Taktsystem einer Videosignalquelle gekoppelt ist, deren Bild zusammen mit der OSD-Einblendung am Bildschirm dargestellt wird, wobei das Taktsystem der Videosignalquelle schwanken kann. Derartige Schwankungen treten insbesondere bei von einem Videorecorder gelieferten Bildsignalen auf, bei denen der Pixeltakt aufgrund von Positionsungenauigkeiten des Videokopfes oder aufgrund von Bandgeschwindigkeitsschwankungen variieren kann. Darüber hinaus liegen systembedingte Pixeltaktschwankungen vor, da der Pixeltakt bekanntlich von einem eine Regelungsschwankungsbreite aufweisenden Phasenregelkreis erzeugt wird. Insbesondere beim Zeilenanfang während der Einschwingphase des Phasenregelkreises kann der Pixeltakt um das Zweifache schwanken.

Bei bisherigen Lösungen, beispielsweise dem integrierten Baustein SDA 5273 von Siemens, siehe hierzu die Siemens-Produktinformation "ICs for Consumer Electronics, MEGATEXT, SDA 5273" Ausgabe 5.93, Seiten 14 - 18, werden alle internen Funktionseinheiten, insbesondere der Speicher, der Display-Generator sowie die ihm nachgeschalteten Funktionseinheiten vom Horizontalsynchronimpuls und dem daraus abgeleiteten Bildpunkttakt gesteuert. Ein FIFO-Speicher im Auslesepfad dient zur Umsetzung von 4 : 3-Darstellung zu 16 : 9-Darstellung, wie in der EP-A-0 597 197 beschrieben. Eingangs- und Ausgangstaktrate des FIFO-Speichers sind durch ein festes Verhaltnis aneinander gekoppelt. Der FIFO-Speicher wird also bei SDA 5273 sowohl eingangs- als auch ausgangsseitig von einem an den Horizontalsynchron- und Pixeltakt des Bildschirms gekoppelten Taktsystem gesteuert.

Problematisch bei dieser Realisierung ist, dass alle Funktionseinheiten, die vom Wiedergabetaktsystem gesteuert werden, welches wie oben beschrieben nicht unerheblichen Schwankungen unterliegt, für die grösstmöglich zu erwartende Taktfrequenz dimensioniert werden müssen. Dies erhöht den Schaltungsaufwand und birgt die Gefahr, dass das System bei Frequenzspitzen ausfällt. Darüber hinaus muss bei einer Anpassung des Systems an andere Frequenzstandards die komplette Schaltung überarbeitet werden.

Die EP 0 381 271 beschreibt eine Anzeigevorrichtung zur wahlweisen Darstellung von Bildern im 9:16-Format oder 3:4-Format. In einem Bildspeicher werden bei dieser Anzeigevorrichtung Bilddaten mit derselben Geschwindigkeit eingeschrieben wie ausgelesen, wenn das Bild im 9:16-Format dargestellt werden soll. Für eine Darstellung im 3:4-Format werden die Bilddaten schneller aus dem Speicher ausgelesen als in den Speicher eingeschrieben.

Die Aufgabe der Erfindung besteht darin, eine eingangs genannte Schaltungsanordnung derart zu verbessern, so dass trotz Änderungen und Schwankungen des Wiedergabetaktes ein geringerer Schaltungsaufwand erforderlich ist.

Erfindungsgemäss wird diese Aufgabe durch eine Schaltungsanordnung gemass den Merkmalen des Patentanspruchs 1 gelöst.

Bei der erfindungsgemässen Schaltungsanordnung werden Eingangs- und Ausgangsseite des FIFO-Speichers von zueinander im allgemeinen asynchronen Taktsignalen gesteuert. Da der Schaltungspfad bis zur Eingangsseite des FIFO-Speichers mit einem konstanten, beispielsweise von einem Quarzoszillator abgeleiteten Takt gesteuert wird, brauchen die entsprechenden Schaltungseinrichtungen nur für dessen Taktfrequenz dimensioniert werden. Für schwankende Taktfrequenzen muss lediglich die Ausgangsseite des FIFO-Speichers sowie der nachgeschaltete D/A-Wandler ausgelegt werden.

Heutzutage besitzt ein Fernsehgerät eine Busarchitektur. Eine Vielzahl von Funktionseinheiten kommunizieren über einen gemeinsamen Datenbus, insbesondere auch der Video-speicher sowie der vom Videospeicher mit Daten versorgte Display-Generator, dem Funktionseinheiten wie FIFO-Speicher und Analog-Digital-Wandler nachgeschaltet sind. Die erfindungsgemäße Schaltungsanordnung weist in Zusammenhang mit einer Busstrük= ' tur den Vorteil auf, daß wegen der Pufferung durch den FIFO-Speicher es nicht notwendig ist, bei einer OSD-Wiedergabe der Bus ständig vom Datenverkehr zwischen Videospeicher und Display-Generator blockiert wird, sondern daß auch Buszugriffe höherer Priorität während einer OSD-Wiedergabe abgearbeitet werden können. Bei einem System nach dem Stand der Technik würde ein Buszugriff höherer Priorität zu einem Pixelfehler im wiedergegebenen OSD-Bild führen.

Darüber hinaus kann die gleiche Schaltung bei entsprechender Auslegung des Auslesepfades des FIFO-Speichers in Systemen mit verschiedener Wiedergabefrequenz verwendet werden, beispielsweise sowohl zur Ansteuerung von Fernsehgeräten als auch zur Ansteuerung von hochauflösenden Monitoren für Personal Computer, die eine relativ hohe Wiedergabefrequenz haben. Der Unterschied in der Bildschirmwiedergabe liegt nur darin, daß bei höherer Wiedergabefrequenz die wiedergegebenen Zeichen einen kleineren Abschnitt am Bildschirm ausfüllen.

Nachfolgend wird die Erfindung anhand des in der Zeichnung dargestellten Ausführungsbeispieles näher erläutert. Es zeigen
- Figur 1: ein Prinzipschaltbild einer erfindungsgemäßen Anordnung,
- Figur 2: eine Darstellung der Zustände am FIFO-Speicher, wenn die Wiedergabefrequenz geringer ist als die Systemfrequenz und
- Figur 3: eine entsprechende Darstellung für den umgekehrten Fall.

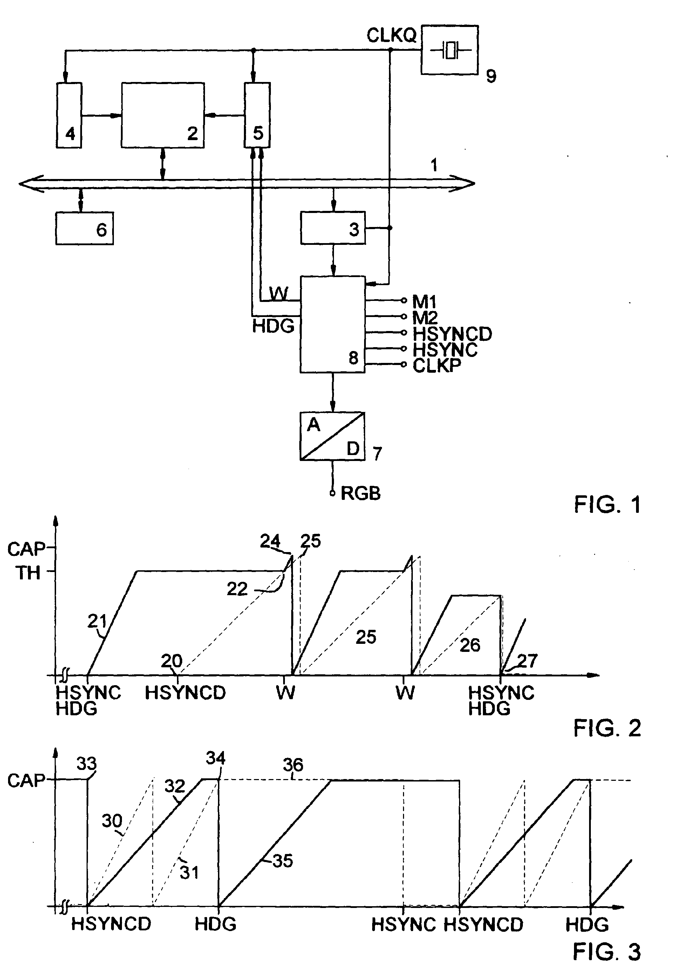

Die Schaltungsanordnung gemäß Figur 1 stellt einen Teil eines Fernsehgerätes für On-Screen-Display dar. Mit dieser sind beliebige Zeichen und Grafiken, beispielsweise auch solche, die durch einen Teletextstandard übertragen werden, an einem Bildschirm darstellbar. Die Funktionseinheiten der Schaltung tauschen über einen Bus 1 Daten miteinander aus. Die darzustellende OSD-Information ist in einem Videospeicher 2 gespeichert. Der Videospeicher 2 enthält entweder Abtastwerte für jeden darzustellenden Bildpunkt oder codierte Information, die dann (wie in Figur 1 dargestellt) über einen Display-Generator 3 in Abtastwerte für Bildpunkte umgewandelt wird. Der Videospeicher 2 wird über eine Schreibeinrichtung 4 beschrieben und mittels eines Leseadreßgenerators 5 ausgelesen. Darüber hinaus sind an den Datenbus 1 weitere Einheiten angeschlossen, wie beispielsweise ein Controller 6. Die vom Display-Generator 3 erzeugten Abtastwerte für die darzustellenden Bildpunkte werden in einem Digital-Analog-Wandler 7 in analoge Rot-Grün-Blau-Signale RGB gewandelt, durch die eine Bildröhre ansteuerbar ist.

Zwischen Display-Generator 3 und D/A-Mandler 7 ist ein Pufferspeicher 8 mit First-In-First-Out-Betriebsweise geschaltet. Erfindungsgemäß werden die Eingangsseite des Pufferspeichers 8 sowie die im Datenpfad vorgeschaltete Einheiten 2... 5 von einem Taktgenerator 9 gesteuert, der ein Signal CLKQ mit vorgegebener, konstanter Taktfrequenz abgibt. Der Taktgenerator 9 ist zweckmäßigerweise ein Quarzoszillator. Die Ausgangsseite des FIFOs 8 sowie der ihr nachgeschaltete D/A-Wandler 7 werden vom Wiedergabetaktsystem gesteuert, daß einen Pixeltakt CLKP aufweist. Darüber hinaus werden vom Bildschirm abgeleitete Horizontalsynchronimpulse zugeführt, ein Impuls HSYNC, durch den der Zeilenrücklauf des Elektronenstrahls des Bildschirms eingeleitet wird und durch den das Zeilenende gekennzeichnet ist, sowie ein Impuls HSYNCD, ein verzögerter Horizontalsynchron-impuls, durch den der Beginn einer Zeile festgelegt wird. Zwischen zwei aufeinanderfolgenden Impulsen von HSYNC und HSYNCD erfolgt der Zeilenrücklauf des Elektronenstrahls (sogenannte Horizontalaustastlücke). Der FIFO-Speicher 8 erzeugt außerdem einen Warteimpuls W, der dem Ausleseadreßgenerator 5 zugeführt wird und durch den das Auslesen aus dem Speicher 2 gestoppt wird, sowie einen Impuls HDG, der dem Adressgenerator 5 den Auslesebeginn mitteilt. Die Steuerung des Display-Generators 3 und des Speichers 2 erfolgt in Abhängigkeit vom Füllstand des FIFO-Speichers 8, der durch den mit Abtastwerten belegten Speicherplatz angegeben wird.

Die Wirkungsweise des FIFO-Speichers 8 in der dargestellten Schaltungsanordnung wird anhand der Diagramme in Figur 2 und Figur 3 näher erläutert. Der FIFO-Speicher 8 ist dabei als ein Ringspeicher ausgeführt, d. h. die Schreib- und Leseadreßgeneratoren sind jeweils Zähler, die aufsteigend zählen und an der oberen Zählgrenze automatisch wieder von neuem beginnen. In den Figuren 2 und 3 sind der Verlauf der Schreib- und Lesezähler des FIFO-Speichers 8 mit durchgezogener bzw. unterbrochener Linie dargestellt. Der Füllstand wird durch die relative Stellung der Schreib- und Lesezähler zueinander am FIFO ermittelt.

Im Fall der Figur 2 erfolgt das Einschreiben in den FIFO-Speicher 8 schneller als das Auslesen, d. h. die Taktfrequenz des festfrequenten Taktsignals CLKQ ist größer als die Auslesefrequenz des Pixeltaktes CLKP. Der Speicher weist eine Speicherkapazität einer Anzahl von CAP Pixeln (Bildpunkten) auf. Bei einem Impuls HSYNCD, der den Zeilenanfang angibt, wird der bereits rückgesetzte Auslesezähler bei 20 gestartet. Zumindest zu diesem Zeitpunkt, zweckmäßigerweise bereits vorher erfolgt mit dem Zeiger 21 das Einlesen in den FIFO-Speicher 8. Zweckmäßigerweise wird mit dem Einlesen bei einem Zeilenrücklaufimpuls HSYNC begonnen. Der Einlesevorgang wird fortgesetzt, bis eine Schwelle TH erreicht wird. Mittels Abgabe eines Warteimpulses W an die Ausleseeinrichtung 5 wird das Auslesen aus dem Speicher 2 angehalten. Wenn der Zählerstand des fortlaufend arbeitenden Auslesezählers des FIFO-Speichers an der Stelle 22 die Schwelle TH erreicht, wird der Einlesevorgang fortgesetzt. Sind Einlese- und Auslesezähler an der oberen Adreßgrenze 23 bzw. 24 angelangt, werden Sie rückgesetzt und starten unmittelbar folgend beim Anfangszählerstand Null. Dieser Vorgang wird im vorliegenden Fall.wie mit 25 und 26 bezeichnet zweimal wiederholt, bis an der Stelle 27 ein weiterer Zeilenrücklaufimpuls HSYNC auftritt, durch den Einlese- und Auslesezähler rückgesetzt werden, wobei ersterer wiederum mit dem Vorladen des FIFO-Speichers beginnt und letzterer bis zum verzögertem Horizontalsynchronimpuls HSYNCD wartet.

Der dargestellte Zählverlauf ist insoweit ideal gezeichnet, daß interne Zeitverzögerungen, beispielsweise zum Initialisieren, zur Voreinstellung von Registerwerten, usw. nicht dargestellt sind. Beispielsweise tritt eine derartige Verzögerung an der Stelle 22 auf, wenn der Einlesevorgang fortgesetzt wird. Es ist deshalb zweckmäßig, den Einlesevorgang dann weiterzuführen, wenn der Auslesezähler eine zweite Schwelle erreicht, die mindestens um die interne Verzögerungszeit niedriger ist als die dargestellte Schwelle TH. In entsprechender Weise liegt eine interne Verzögerung an der Stelle 27 vor, wenn der Einlesevorgang für die neue Zeile gestartet wird, die dadurch bedingt ist, daß im Videospeicher 2 und im Display-Generator 3 entsprechende Vorbesetzungen zu treffen sind, um auf die Daten für eine neue Bildzeile umzuschalten.

In der Figur 3 sind der Zählerstand des Schreibzählers (durchgezogene Linie) und der Zählerstand des Auslesezählers (unterbrochene Linie) im Zeitverlauf von zwei Bildzeilen dargestellt, wobei die Taktfrequenz des festfrequenten Taktsignals CLKQ langsamer ist als die Taktfrequenz des Pixeltaktes CLKP. Der FIFO-Speicher ist beim Auftreten des verzögerten Horizontalsynchronimpulses HSYNCD, der den Zeilenbeginn angibt, bereits möglichst weit, vorzugsweise vollständig bei 33 vorgeladen. Der Auslesezähler.ist bereits rückgesetzt und wird mit dem Impuls HSYNCD gestartet. Der Einlesezähler läuft weiter zum wiederholten Laden des FIFO-Speichers. Je nach Taktfrequenzverhältnis zwischen Einlese- und Auslesetakt (CLKQ; CLKP) können mehrfache Wiederholungen von Einlese- und Auslesedurchläufen durchgeführt werden. Bedingung ist, daß sich Einlese- und Auslesezeiger nicht schneiden. Im vorliegenden Fall wird mit den Auslesezeigern 30, 31 zweimal hintereinander der vollständige FIFO-Speicherinhalt ausgelesen; mit dem Einlesezeiger 32 wird eingelesen, wobei der FIFO-Speicher vorher an der Stelle 33 bereits gefüllt war. Die Anzahl der Wiederholungen von Ein- und Auslesen wird zweckmäßigerweise in Abhängigkeit des Verhältnisses der Taktfrequenzen CLKQ, CLKP programmiert und dem FIFO als Signal M2 mitgeteilt. Nach dem Ende des letzten Auslesens an der Stelle 34 erfolgt zweckmäßigerweise bereits ein Impuls HDG, durch den dem Adreßgenerator 5 für den Videospeicher 2 mitgeteilt wird, daß eine neue Zeile beginnt. Daraufhin erfolgt nach interner Verzögerung der Vorladevorgang 35 des FIFO-Speichers für die mit dem nächsten Auftreten des Impulses HSYNCD auszulesende und darzustellende Bildzeile.

Im allgemeinen wird in diesem Fall der Figur 3 der Bildschirm nicht in voller horizontaler Breite mit OSD-Information beschrieben werden können. Zweckmäßigerweise wird deshalb am Ende 34 des letztmaligen Zählerdurchlauf während des Auslesens innerhalb einer Zeile ein konstanter Wert an den D/A-Wandler 7 abgegeben, um im verbleibenden Rest der Bildzeile einen Hintergrundwert darzustellen. Praktisch wird dies derart ausgeführt, daß der Auslesezähler bei seinem obersten Zählerstand 36 verbleibt und den Wert dieser Speicherzelle fortlaufend an den D/A-Wandler 7 ausgibt. Mit dem nächsten Zeilenrücklaufimpuls HSYNC wird der Zähler wieder zurückgesetzt. Alternativ dazu (nicht dargestellt) kann am Eingang des D/A-Wandlers 7 ein Multiplexer vorgesehen werden, durch den dem Wandler 7 ein konstanter Wert zugeführt wird. Die Umschaltung zwischen den in den Figuren 2 und 3 gezeigten Betriebsarten wird dem FIFO-Speicher 8 durch ein entsprechendes Signal M1 angezeigt. Das Signal M1 wird automatisch durch einen Frequenzvergleich der Signale CLKQ, CLKP auf herkömmliche Weise erzeugt. Beispielsweise erfolgt dies durch paralleles Ansteuern von Zählern mit den Signalen CLKQ bzw. CLKP und Vergleich der Zählerstände zu einem vorgegebenen Zeitpunkt.

Die Anzahl der im FIFO-Speicher zu speichernden Abtastwerte hängt von der Menge der darzustellenden Bildpunkte und dem Frequenzverhältnis der Takte CLKQ, CLKP ab. In einer praktischen Ausführung wurden Frequenzen von 40 MHz für CLKQ und 12 MHz für CLKP für die erste Betriebsart sowie 40 MHz bzw. 80 MHz für die zweite Betriebsart gewählt, wobei sich eine Speicherkapazität von 300 Abtastwerten für den FIFO-Speicher als ausreichend herausgestellt hat.

## Patentansprüche

1. Schaltungsanordnung zur Erzeugung eines an einem Bild- , schirm mit einer ersten Taktrate (CLKP) darstellbaren Bildsignals (RGB), umfassend ein Mittel (2, 3, 5) zur Bereitstellung von Abtastwerten mit einer zweiten, konstant vorgegebenen, von der ersten Taktrate (CLKP) asynchronen Taktrate (CLKQ), einen Speicher (8) mit First-In-First-Out-Betriebsweise, dem die Abtastwerte mit der zweiten Taktrate (CLKQ) zuführbar sind und von dem die Abtastwerte mit der ersten Taktrate (CLKP) ausgebbar sind, und eine mit der ersten Taktrate (CLKP) steuerbare Digital-Analog-Wandlereinrichtung (7), der die vom Speicher (8) ausgegebenen Abtastwerte zur Erzeugung des darstellbaren Bildsignals (RGB), durch das der Bildschirm ansteuerbar ist, zuführbar sind,
**dadurch gekennzeichnet, dass**
der Speicher (8) einen die Einleseadressen ringweise zählenden Einlesezähler und einen die Ausleseadressen ringweise zählenden Auslesezähler aufweist, dass dann, wenn die zweite Taktrate (CLKQ) grösser ist als die erste Taktrate (CLKP), das Einlesen von Abtastwerten in den Speicher angehalten wird (W; 22), wenn der Einlesezähler eine erste Schwelle (TH) erreicht, und das Einlesen weitergeführt wird, wenn der Auslesezähler eine zweite Schwelle erreicht, die kleiner oder gleich der ersten Schwelle (TH) ist.

2. Schaltungsanordnung zur Erzeugung eines an einem Bildschirm mit einer ersten Taktrate (CLKP) darstellbaren Bildsignals (RGB), umfassend ein Mittel (2, 3, 5) zur Bereitstellung von Abtastwerten mit einer zweiten, konstant vorgegebenen, von der ersten Taktrate (CLKP) asynchronen Taktrate (CLKQ), einen Speicher (8) mit First-In-First-Out-Betriebsweise, dem die Abtastwerte mit der zweiten Taktrate (CLKQ) zuführbar sind und von dem die Abtastwerte mit der ersten Taktrate (CLKP) ausgebbar sind, und eine mit der ersten Taktrate (CLKP) steuerbare Digital-Analog-Wandlereinrichtung (7), der die vom Speicher (8) ausgegebenen Abtastwerte zur Erzeugung des darstellbaren Bildsignals (RGB), durch das der Bildschirm ansteuerbar ist, zuführbar sind,
**dadurch gekennzeichnet, dass**
der Speicher (8) einen die Einleseadressen ringweise zählenden Einlesezähler und einen die Ausleseadressen ringweise zählenden Auslesezähler aufweist, dann, wenn die zweite Taktrate (CLKQ) kleiner ist als die erste Taktrate (CLKP), das Einlesen in den Speicher bereits vor dem Beginn des Auslesens (35) ausgeführt wird und das Einlesen angehalten wird (33), wenn der Einlesezähler eine dritte Schwelle (CAP) erreicht, und dass das Einlesen mit dem Beginn des Auslesens weitergeführt wird. '

3. Schaltungsanordnung nach Anspruch 1,
**dadurch gekennzeichnet, dass**
das Mittel (2, 3, 5) zur Bereitstellung der Abtastwerte in Abhängigkeit von der durch die Abtastwerte belegten Speichermenge des Speichers (8) steuerbar ist.

4. Schaltungsanordnung nach einem der Ansprüche 1 oder 3,
**dadurch gekennzeichnet, dass**
das Einlesen in den Speicher während der Horizontalaustastlücke durchgeführt wird.

5. Schaltungsanordnung nach einem der Ansprüche 1 bis 4,
**dadurch gekennzeichnet, dass**
das Einlesen in den Speicher durch einen Impuls (HSYNC) begonnen wird, der das Ende einer am Bildschirm dargestellten Zeile angibt, und dass das Auslesen durch einen weiteren Impuls (HSYCD) begonnen wird, der den Beginn einer nachfolgend am Bildschirm darzustellenden Zeile angibt, wobei die jeweiligen Einlese- bzw. Auslesezähler rückgesetzt und gestartet werden.

6. Schaltungsanordnung nach einem der Ansprüche 2 bis 5,
**dadurch gekennzeichnet, dass**
dann, wenn die zweite Taktrate (CLKQ) kleiner ist als die erste Taktrate (CLKP), durch ein Signal (M2) die Anzahl der Ringdurchläufe des Auslesezählers angegeben wird und dass dann, wenn der Auslesezähler am Ende des letzten Durchlaufs (34) angelangt ist, ein konstanter Abtastwert an den Digital-Analog-Wandler (7) abgegeben wird.

7. Schaltungsanordnung nach Anspruch 6,
**dadurch gekennzeichnet, dass**
mit dem letzten Durchlauf (34) das Einlesen in den Speicher begonnen wird, indem der Einlesezähler rückgesetzt und gestartet wird.

8. Schaltungsanordnung nach einem der Ansprüche 1 bis 7,
**dadurch gekennzeichnet, dass**
die Mittel (2, 3, 5) zur Bereitstellung von Abtastwerten einen weiteren Speicher (2) enthalten, in welchem den Abtastwerten zugeordnete Daten gespeichert sind, und einen Auslesezähler (5) für diesen Speicher, der mit der zweiten Taktrate (CLKQ) gesteuert wird.

9. Schaltungsanordnung nach Anspruch 8,
**dadurch gekennzeichnet, dass**
dem weiteren Speicher (2) eine mit der zweiten Taktrate (CLKQ) gesteuerte Einrichtung (3) nachgeschaltet ist, durch die die aus dem weiteren Speicher (2) ausgelesenen Daten in digitale Rot-Grün-Blau-Signale umsetzbar sind.

## Claims

1. A circuit configuration for generating a picture signal (RGB) that can be displayed on a screen at a first clock rate (CLKP), comprising a means (2, 3, 5) for providing sampling values at a second, constantly given clock rate (CLKQ) that is asynchronous with respect to the first clock rate (CLKP), a memory (8) with a first-in-first-out operating mode, to which the sampling values can be supplied at the second clock rate (CLKQ) and from which the sampling values can be outputted at the first clock rate (CLKP), and a digital-to-analogue converter (7) that can be controlled at the first clock rate (CLKP) and to which the sampling values outputted by the memory (8) can be supplied to generate the picture signal (RGB) to be displayed, by which the screen can be controlled,
**characterised in that** the memory (8) comprises a read in counter that counts the read in addresses in a loop and a read out counter that counts the read out addresses in a loop, and
**in that** if the second clock rate (CLKQ) is greater than the first clock rate (CLKP), the reading in of sampling values into the memory is stopped (W; 22) when the read in counter reaches a first threshold (TH), and the reading-in operation is continued when the read out counter reaches a second threshold which is less than or equal to the first threshold (TH).

2. A circuit configuration for generating a picture signal (RGB) that can be displayed on a screen at a first clock rate (CLKP), comprising a means (2, 3, 5) for providing sampling values at a second, constantly given clock rate (CLKQ) that is asynchronous with respect to the first clock rate (CLKP), a memory (8) with a first-in-first-out operating mode, to which the sampling values can be supplied at the second clock rate (CLKQ) and from which the sampling values can be outputted at the first clock rate (CLKP), and a digital-to-analogue converter (7) that can be controlled at the first clock rate (CLKP) and to which the sampling values outputted by the memory (8) can be supplied to generate the picture signal (RGB) to be displayed, by which the screen can be controlled,
**characterised in that** the memory (8) comprises a read in counter that counts the read in addresses in a loop and a read out counter that counts the read out addresses in a loop then, if the second clock rate (CLKQ) is less than the first clock rate (CLKP), reading into the memory is performed prior to the start of the reading out operation (35) and the reading in operation is stopped (33) when the read in counter reaches a third threshold (CAP),
and **in that** the reading in operation is continued with the start of the reading out operation.

3. A circuit configuration according to Claim 1,
**characterised in that** the means (2, 3, 5) for providing the sampling values can be controlled in dependence on the volume of the memory (8) occupied by the sampling values.

4. A circuit configuration according to one of Claims 1 or 3,
**characterised in that** reading into the memory is performed during the horizontal blanking interval.

5. A circuit configuration according to one of Claims 1 to 4,
**characterised in that** the reading into the memory is started by a pulse (HSYNC) that indicates the end of a line displayed on the screen,
and **in that** the reading out is started by another pulse (HSYND) that indicates the start of a line subsequently to be displayed on the screen, with the respective read in and read out counters being reset and started.

6. A circuit configuration according to one of Claims 2 to 5,
**characterised in that** when the second clock rate (CLKQ) is less than the first clock rate (CLKP), the number of loop runs of the read out counter is given by a signal (M2), and when the read out counter has arrived at the end of the last run (34), a constant sampling value is delivered to the digital-to-analogue converter (7).

7. A circuit configuration according to Claim 6,
**characterised in that** the read in operation into the memory is started with the last run (34) by the read in counter being reset and started.

8. A circuit configuration according to one of Claims 1 to 7,
**characterised in that** the means (2, 3, 5) for providing sampling values contain an additional memory (2) in which data associated with the sampling values is stored, and a read out counter (5) for this memory, which is controlled at the second clock rate (CLKQ).

9. A circuit configuration according to Claim 8,
**characterised in that** a device (3) controlled at the second clock rate (CLKQ), by which the data read out from the additional memory (2) can be converted into digital red-green-blue signals, is connected after the additional memo

## Revendications

1. Circuit pour générer un signal d'image (RGB) pouvant être représenté sur un écran avec une première fréquence d'impulsions (CLKP), comprenant des moyens (2, 3, 5) pour fournir des valeurs de balayage avec une deuxième fréquence d'impulsions (CLKQ) constante prédéterminée asynchrone par rapport à la première fréquence d'impulsions (CLKP), une mémoire (8) fonctionnant selon la méthode de premier entré premier sorti qui peut recevoir les valeurs de balayage avec la deuxième fréquence d'impulsions (CLKQ) et émettre les valeurs de balayage avec la première fréquence d'impulsions (CLKP), et un convertisseur numérique/analogique (7) pouvant être commandé avec la première fréquence d'impulsions (CLKP) et recevoir les valeurs de balayage émises par la mémoire (8) pour générer le signal d'image (RGB) à représenter qui peut commander l'écran,
**caractérisé en ce que**
la mémoire (8) présente un compteur d'écriture comptant les adresses à écrire de façon annulaire et un compteur de lecture comptant les adresses à lire de façon annulaire, et
lorsque la deuxième fréquence d'impulsions (CLKQ) est supérieure à la première fréquence d'impulsions (CLKP) l'écriture de valeurs de balayage dans la mémoire est stoppée (W ; 22) si le compteur d'écriture atteint un premier seuil (TH), et l'écriture se poursuit si le compteur de lecture atteint un deuxième seuil inférieur ou égal au premier seuil (TH).

2. Circuit pour générer un signal d'image (RGB) pouvant être représenté sur un écran avec une première fréquence d'impulsions (CLKP), comprenant des moyens (2, 3, 5) pour fournir des valeurs de balayage avec une deuxième fréquence d'impulsions (CLKQ) constante prédéterminée asynchrone par rapport à la première fréquence d'impulsions (CLKP), une mémoire (8) fonctionnant selon la méthode du premier entré premier sorti qui peut recevoir les valeurs de balayage avec la deuxième fréquence d'impulsions (CLKQ) et émettre les valeurs de balayage avec la première fréquence d'impulsions (CLKP), et un convertisseur numérique/analogique (7) pouvant être commandé avec la première fréquence d'impulsions (CLKP) et recevoir les valeurs de balayage émises par la mémoire (8) pour générer le signal d'image (RGB) à représenter qui peut commander l'écran,
**caractérisé en ce que**
la mémoire (8) présente un compteur d'écriture comptant les adresses à écrire de façon annulaire et un compteur de lecture comptant les adresses à lire de façon annulaire,
lorsque la deuxième fréquence d'impulsions (CLKQ) est inférieure à la première fréquence d'impulsions (CLKP) l'écriture de valeurs de balayage dans la mémoire est déjà effectuée avant le début de la lecture (35) et l'écriture est stoppée (33) si le compteur d'écriture atteint un troisième seuil (CAP), et
l'écriture se poursuit avec le début de la lecture.

3. Circuit selon la revendication 1,
**caractérisé en ce que**
des moyens (2, 3, 5) pour fournir les valeurs de balayage peuvent être commandés en fonction de la capacité de stockage de la mémoire (8) occupée par les valeurs de balayage.

4. Circuit selon l'une quelconque des revendications 1 à 3,
**caractérisé en ce que**
l'écriture dans la mémoire s'effectue pendant la fenêtre de balayage horizontal.

5. Circuit selon l'une quelconque des revendications 1 à 4,
**caractérisé en ce que**
l'écriture dans la mémoire est déclenchée par une impulsion (HSYNC) qui indique la fin d'une ligne représentée sur l'écran, et la lecture est déclenchée par une autre impulsion (HSYNC) qui indique le début d'une ligne suivante à représenter sur l'écran, les compteurs d'écriture et de lecture respectifs étant remis à zéro et démarrés.

6. Circuit selon l'une quelconque des revendications 2 à 5,
**caractérisé en ce que**
lorsque la deuxième fréquence d'impulsions (CLKQ) est inférieure à la première fréquence d'impulsions (CLKP), le nombre des passages annulaires du compteur de lecture est indiqué par un signal (M2), et lorsque le compteur de lecture est arrivé à la fin du dernier passage (34) une valeur de balayage constante est émise vers le convertisseur numérique/analogique (7).

7. Circuit selon la revendication 6,
**caractérisé en ce que**
l'écriture dans la mémoire commence par le dernier passage (34) en mettant le compteur d'écriture à zéro et en le démarrant.

8. Circuit selon l'une quelconque des revendications 1 à 7,
**caractérisé en ce que**
les moyens (2, 3, 5) pour fournir des valeurs de balayage comprennent une autre mémoire (2) dans laquelle sont stockées des données associées aux valeurs de balayage, et pour cette mémoire un compteur de lecture (5) commandé avec la deuxième fréquence d'impulsions (CLKQ).

9. Circuit selon la revendication 8,
**caractérisé en ce qu'**
en aval de l'autre mémoire (2) est monté un dispositif (3) commandé avec la deuxième fréquence d'impulsions (CLKQ), et qui permet de convertir les données lues de l'autre mémoire (2) en signaux rouges-verts-bleus numériques.
